Europäisches Patentamt

European Patent Office

Office européen des brevets

(19)

(11) Veröffentlichungsnummer: **0 247 285 B1**

(12) **EUROPÄISCHE PATENTSCHRIFT**

(45) Veröffentlichungstag der Patentschrift: **23.10.91**

(51) Int. Cl.5: **C10L 5/46**

(21) Anmeldenummer: **87102081.4**

(22) Anmeldetag: **13.02.87**

(54) Verfahren zum Herstellen von Presslingen aus feuchtem Abfall.

(30) Priorität: **20.05.86 DE 3616947**

(43) Veröffentlichungstag der Anmeldung:
**02.12.87 Patentblatt 87/49**

(45) Bekanntmachung des Hinweises auf die
Patenterteilung:
**23.10.91 Patentblatt 91/43**

(84) Benannte Vertragsstaaten:
**AT BE CH DE ES FR GB GR IT LI LU NL SE**

(56) Entgegenhaltungen:
**WO-A-81/03029**
**DE-A- 2 917 036**
**DE-A- 3 226 798**

(73) Patentinhaber: **ORGAN-FASER TECHNOLOGY
COMPANY N.V.**
**de Ruyterkade 62 P.O. Box 812**
**Curaçao(AN)**

(72) Erfinder: **Frei, Josef**
**Römerweg 32**
**CH-5422 Oberehrendingen(CH)**

(74) Vertreter: **Körber, Wolfhart, Dr.rer.nat.
Patentanwälte Dipl.-Ing. H. Mitscherlich
Dipl.-Ing. K. Gunschmann Dr.rer.nat. W. Körber Dipl.Ing. J. Schmidt-Evers Dipl.-Ing. W.
Melzer Steinsdorfstrasse 10
W-8000 München 22(DE)**

Rank Xerox (UK) Business Services

**Beschreibung**

Die Erfindung bezieht sich auf ein Verfahren nach dem Oberbegriff des Anspruchs 1.

Feuchte Abfälle sind sowohl hinsichtlich ihrer Handhabung als auch Beseitigung problematisch. Dies gilt insbesondere für Klärschlamm aus kommunalen und industriellen Kläranlagen. Vor einigen Jahren wurden die kommunalen Klärschlämme nach teilweiser Behandlung wie Faulung, Pasteurisierung, Hygienisierung usw. vieler Orts der Landwirtschaft durch Austragung zugeführt. Dies kann auf die Dauer nicht praktiziert werden. Gründe dafür sind die unumgänglichen Belastungen des Schlammes durch Schwermetalle und andere Problemsubstanzen, die sich nach der Ausbringung in Böden und im Grundwasser absetzen.

Aus der vorgenannten Problematik lassen sich folgende Forderungen herleiten.

Die vorhandene Problematik feuchter Abfälle umweltfreundlich und ökonomisch vertretbar zu lösen.

Den feuchten Abfall kostengünstig in eine Form umzusetzen, daß er genutzt werden und anschließend mit vorhandenen Technologien in Energie umgewandelt werden kann.

Gemeinsame Ausnutzung der sowohl im festen Abfall (Müll) als auch im feuchten Abfall wie Klärschlamm sowie landund forstwirtschaftliche Abfälle vorhandene Energie.

Umwandlung des feuchten Abfalls in lager- und transportfähige Energieprodukte.

Aufbereitung der Energieprodukte regional-dezentral und Nutzung derselben zentral, was ökonomisch am optimalsten erscheint.

Es ist bekannt, Abfall zu Preßlingen zu verarbeiten, um z.B. eine Volumenverringerung, eine Verbesserung der Stapel- bzw. Lagerfähigkeit und eine Vereinfachung des Transports z.B. zwecks Weiterführung zu einer Verbrennungsanlage zu erreichen. Dabei unterscheidet man zwischen Preßverfahren mit verhältnismäßig niedrigem Druck und Preßverfahren mit verhältnismäßig hohem Druck. Im ersten Fall ist es üblich, die Preßlinge in einem Gebinde zu verarbeiten, d.h., in Bänder, Seilen oder Geflechte zu binden. Im zweiten Fall ist ein Gebinde des Presslings nicht notwendig, weil aufgrund der hohen Verdichtung eine erhebliche Materialverfestigung eintritt, aus der sich feste Preßlinge ergeben.

Aus WO-A-8 103 029 ist ein Verfahren zur Herstellung von Blöcken aus festen und flüssigen Abfällen bekannt. Bei diesem Verfahren werden die gemischten Abfälle unter leichtem Formdruck zu Blöcken geformt. Zur Endtrocknung dieser Produkte wird ein aerober Fermentations- bzw. Kompostierungsprozeß durchgeführt. Die auf diese Weise hergestellten Blöcke müssen bis zu 20 Tage gelagert werden, um durch die biologischen Prozesse die gewünschte Endfeuchte zu erreichen und um brennfähig zu sein.

Die Herstellung von Preßlingen aus feuchtem Abfall ist deshalb schwierig, weil die Feuchtigkeit bzw. der Wassergehalt des Abfalls zu reduzieren ist. Dies gilt insbesondere für Preßlinge, die ohne Gebinde gepreßt werden, weil ein hoher Feuchtigkeitsgehalt die Festigkeit des Presslings beeinträchtigt. Dies gilt auch für vorerwähnte verschnürte Preßlinge, weil an die Festigkeit der Verschnürung erheblich höhere Ansprüche gestellt werden.

Die Reduzierung der Feuchtigkeit des Abfalls kann auf verschiedene Weisen erreicht werden.

Eine erste Möglichkeit besteht darin, den Abfall zu entwässern, was beim Pressen geschehen kann. Diese Methode läßt sich nur mit besonderen Preßvorrichtungen mit Entwässerungsöffnungen durchführen, wobei mit Schwierigkeiten aufgrund von Verstopfungen zu rechnen ist. Außerdem fällt Abwasser an, für dessen Abführung und ggf. Deponierung zu sorgen ist. Ferner können mit dem Abwasser brennbare Bestandteile entweichen, was insbesondere für solche Preßlinge von Nachteil ist, die als Brennstoff dienen sollen.

Es ist auch möglich, die Feuchtigkeit von feuchtem Abfall thermisch in dafür geeigneten Vorrichtungen unter Einsatz von zusätzlicher Wärme herabzusetzen. Diese Trocknungsart ist kostenintensiv.

Der Feuchtigkeitsgehalt von Abfall kann sowohl durch die Zusammensetzung des Abfalls bestimmt sein, als auch durch äußere Einflüsse, z.B. Regen.

Der Erfindung liegt die Aufgabe zugrunde, ein Verfahren der eingangs bezeichneten Art so weiterzubilden, daß feuchter Abfall ohne Trocknung zu Preßlingen gepresst werden kann.

Diese Aufgabe wird durch die kennzeichnenden Merkmale des Anspruchs 1 gelöst.

Bei beiden erfindungsgemäßen Verfahren wird der feuchte ggf. zerkleinerte Abfall mit Trockenstoff (Trägermaterial) vermischt und somit ohne Trocknung auf einen Feuchtigkeitsgehalt gebracht, der sich für das Verpressen zu Preßlingen eignet. Das erfindungsgemäße Verfahren eignet sich insbesondere für organischen Abfall, weil bei einem solchen die Feuchtigkeit der durch das erfindungsgemäße Verfahren hergestellten Preßlinge verhältnismäßig groß ist. Die so hergestellten Preßlinge stellen einen hochwertigen Brennstoff dar, der in bekannten Feststoffeuerungen für Schnitzel oder Späne und/oder Rost- oder Kohlefeuerungen eingesetzt werden kann.

Zwecks befriedigender Vermischung des feuchten Abfalls mit dem Trockenstoff bedarf es einer verhältnismäßig kleinen Teilchengröße bei letzterem. Bei kleinstückigem feuchten Abfall sollte die Teilchengröße des Trockenstoffs im wesentlichen nicht größer als die Teilchengröße des feuchten Abfalls sein. Der Feuchtigkeitsgehalt des trockenen saugfähigen Stoffs sollte vorzugsweise etwa 5 % oder weniger betragen. Es ist ermittelt worden, daß sich bei den erfindungsgemäßen Verfahren zur Herabsetzung des Feuchtigkeitsgehalts faser-, flocken- und/oder blattförmige Stoffe besonders gut eignen. Vorzugsweise werden organische Trockenstoffe dem feuchten Abfall beigemischt. Dabei ist es von Vorteil, faser-, flockenund/oder blattförmige Stoffe in Form von Abfällen zu verwenden, und insbesondere solche Stoffe zu verwenden, die gemäß Anspruch 1 durch einen Aufbereitungsprozeß aus Abfall gewonnen worden sind, wie faser-, flockenund/oder blattförmige Stoffe aus organischen Substanzen, Papier und/oder Kunststoff. Auf diese Weise bedarf es keiner zusätzlichen Stoffe, sondern die Preßlinge werden insgesamt aus Abfall hergestellt, was dem allgemeinen Problem der Abfallbeseitigung vorteilhaft Rechnung trägt und die Festigkeit sowie Brennbarkeit der Preßlinge verbessert.

Das erfindungsgemäße Verfahren eignet sich auch zur Beseitigung bzw. kommerziellen Verwertung der in den Anspruch 2 angeführten Abfälle bzw. Zusätze, insbesondere von Klärschlamm, wobei sich Preßlinge herstellen lassen, die sich vorzüglich für die Verbrennung eignen, wobei im feuchten Abfall und/oder im Trockenstoff ein gewisser Anteil Kunststoff enthalten sein kann, der sich für die Verbrennung eignet.

Die Einmischung von Kalk hat den Vorteil, daß es beim Preßvorgang als Bremsmittel innerhalb der Matrize wirkt und so einen zusätzlichen Widerstand aufbaut und dadurch Preßlinge mit einer höheren Dichte bzw. einem höheren spezifischen Gewicht entstehen.

Es ist auch vorteilhaft, Natron bzw. -lauge in den Abfall einzumischen, die als Weichmacher und Korrosionsmittel auf diverse wachs- oder harzhaltige und spröde Teile wirkt, wodurch sich diese Teile verdichten und besser verbinden lassen.

Um Abfall ohne besondere Nachbehandlung zu verhältnismäßig stabilen Preßlingen verpressen zu können, sollte der Feuchtigkeitsgehalt des Abfalls vor dem Pressen gemäß den Anspruch 1 im Bereich von etwa 15 % liegen, wodurch sich nach dem Pressen eine Rest- bzw. Produktfeuchtigkeit von etwa 7 - 9 % ergibt. Hierdurch werden verhältnismäßig stabile Preßlinge erhalten, die ggf. nur auszukühlen brauchen und somit ohne wesentliche Nachbehandlung der weiteren Verwendung, einem Transport oder unmittelbar der Verbrennung zur Verfügung stehen. Dies gilt insbesondere für das Verpressen von Abfall zu verhältnismäßig kleinen Preßlingen. In einem solchen Fall ist vor dem Verpressen für eine gezielte Zerkleinerung zu sorgen.

Beim Verfahren gemäß Anspruch 1 ist nach dem Pressen eine besondere Nachbehandlung der Preßlinge möglich, nämlich ein aerober Fermentationsprozeß, der zu einer biogenen Trocknung aufgrund Selbsterhitzung der Preßlinge führt, wobei die Preßlinge verpilzen. Hierdurch wird die Festigkeit und deshalb auch Stapelbarkeit der Preßlinge wesentlich vergrößert. Für die aerobe Fermentation eignen sich insbesondere Preßlinge mit einem Feuchtigkeits- bzw. Wassergehalt von etwa 25 - 75 %, vorzugsweise etwa 40 - 60 %. Dieser Wassergehalt läßt sich dadurch erreichen, daß die Preßlinge mit einer geringeren Preßkraft gepreßt werden, wobei die Preßkraft in Abhängigkeit des Wassergehalts zu bemessen ist. Bei einem Wassergehalt, insbesondere an der oberen Grenze des vorgenannten Bereichs ist die Festigkeit und somit auch die Stapelbarkeit der Preßlinge geringer, als wie vorbeschrieben mit einer größeren Preßkraft aus einer Materialmenge mit einem Wassergehalt von etwa 15 % gepreßte Preßlinge, jedoch erhalten die Preßlinge mit dem höheren Wassergehalt eine ausreichende Festigkeit durch die biogene Trocknung und die Verpilzung. Auf diese Weise kann Preßenergie eingespart werden.

Im ersten Fall (etwa 25-75% Wassergehalt) eignet sich eine Flächenpressung von etwa 400 - 500 $N/cm^2$ sehr gut. Im zweiten Fall (etwa 40-60% Wassergehalt) sind gute Ergebnisse mit einer Flächenpressung von etwa 60 - 100 $N/cm^2$ erzielt worden.

Aufgrund der geringeren Festigkeit der Preßlinge im zweiten Falle ist eine quaderförmige Form der Preßlinge zu bevorzugen, um trotz der verhältnismäßig geringen Festigkeit eine Stapelbarkeit der Preßlinge für den aeroben Fermentationsprozeß zu erreichen, für den die Preßlinge in bis zu 5 Lagen übereinander gestellt werden können, wobei wenigstens zwischen horizontal nebeneinander angeordneten Preßlingen einen Spalt vorzusehen, aufgrund dessen der vorbeschriebene Gärprozeß und die Verdampfung stattfinden können. Wasser oder Feuchtigkeit wird während dieses Prozesses nicht zugeführt. Bei Versuchen hat es sich gezeigt, daß sich Preßlinge mit einer Grundflächengröße von etwa 250 x 800 mm und einer Höhe von etwa 200 mm gut eignen.

Der vorerwähnte feuchte Abfall bzw. die vorerwähnten Stoffe werden durch das erfindungsgemäße Verfahren somit zu wertvollen Preßlingen verarbeitet, die als Brennstoff weiterverwendet werden können und die nachstehende Zusammensetzungen aufweisen können. Einige Beispiele:

<u>Variante 1</u>   Nassteile mit 40% $H_2O$   Trockenstoff mit 2% $H_2O$
Nassteile: Hackschnitzel od. Rinde od. Sägespäne usw.
"                         350 kg inkl. 140 kg $H_2O$  )
Trockenstoff      650 kg inkl.  13 kg $H_2O$  )    = 15,3% Pressfeuchtig-
                                                                           keit

$H_2O$ Verlust beim Pressen        80 kg          =  7,3% Produkte-
                                                                          feuchtigkeit


<u>Variante 2</u>   Nassteile mit 25% $H_2O$   Trockenstoffe mit 5% $H_2O$
Nassteile:   wie oben
"                         500 kg inkl. 125 kg $H_2O$  )  =  15% Pressfeuchtigkeit
Trockenstoffe     500 kg inkl.  25 kg $H_2O$  )
$H_2O$ Verlust beim Pressen        80 kg          =   7% Produkte-
                                                                          feuchtigkeit


<u>Variante 3</u>   Nassteile mit 70% $H_2O$   Trockenstoffe mit 2% $H_2O$
Nassteile:   Weichpflanzen, Gräser, Trester aus Brennereien usw.
"                    200 kg inkl. 140 kg $H_2O$ )  = 15,6% Pressfeuchtigkeit
Trockenstoffe 800 kg inkl.  16 kg $H_2O$ )
$H_2O$ Verlust beim Pressen     80 kg        =  7,6% Produktefeuchtigkeit


<u>Variante 4</u>   Nassteile mit 80% $H_2O$   Trockenstoffe mit 2% $H_2O$
Nassteile:   Hygienisierter Klärschlamm aus Kläranlage
"                    180 kg inkl. 144 kg $H_2O$  )
Trockenstoffe 820 kg inkl. 16,4kg $H_2O$  )  = 16,4% Pressfeuchtigkeit
$H_2O$ Verlust beim Pressen     80 kg        =  8,4% Produktefeuchtigkeit


<u>Variante 5</u>   Nassteile mit 78% $H_2O$   Trockenstoffe mit 2% $H_2O$
Nassteile:   wie oben Var. 4
"                    210 kg inkl. 163 kg $H_2O$  )
Trockenstoffe 760 kg inkl.  15 kg $H_2O$  ) = 17,8% Pressfeuchtigkeit
Kalk            30 kg      -      -    -  )
$H_2O$ Verlust beim Pressen     90 kg        =  8,8% Produktefeuchtigkeit


Bei allen aufgezeigten Beispielen (Varianten) kann Kalk zugesetzt oder eingemischt werden. Ebenso kann bei dem Beispiel 5 Kalk weggelassen werden. Kalk wird in der Regel in einer Menge von 3 Gew.-% bezogen auf das Mischgut zugemischt.

Anstelle von der vorg. Kalkzusetzung kann auch eine 30 %ige Natronlauge zugesetzt werden.

Im folgenden werden weitere durch die Erfindung erzielbare Vorteile kurz angeführt.

Sämtliche leicht, mittel und stark feuchte Bio-Massen, die sich für Heizzwecke eignen und in ihrer natürlichen Form nicht oder nur schwer verwendbar anfallen, können in ein auf gewünschte Feuchtigkeit eingestelltes, lagerfähiges und kommerziell verwertbares Heizprodukt fester Form umgewandelt werden. Sämtliche Naßteile mit den unterschiedlichsten Feuchtigkeiten können sofort nach Anfallen der einzelnen Komponenten verarbeitet werden. Es wird die Feinzerkleinerung der Naßteile auf die für die Verpressung verlangte Größe ohne Vortrocknung durch maschinelle Einrichtung oder Langzeitlagerung ermöglicht. Es wird die Verpressung von vorhandenen Naßteilen wie Schlämme, Sägespäne usw., die in Feinform anfallen, ermöglicht, ohne daß sie erst vorgetrocknet werden. Sperrige Naßgüter können ohne teilweise Verrottung auf einen kleinen Raum mit hoher Energiedichte gebracht werden. Schlämme können ohne Vortrocknung insbesondere zu Heizprodukten verpresst werden. Leicht verrottbare Bio-Massen können ohne thermische Behandlung in haltbare lagerfähige Produkte umgewandelt werden. Die Produkte sind in jeder Feststoffeuerung einsetzbar, selbst in vollautomatischen Feuerungsanlagen, die lastabhängig betrieben werden. Erstmals können Klärschlämme aus Kläranlagen ohne großen Energieaufwand in trockene haltbare Brennstoffe umgesetzt werden. Die Erfindung ermöglicht eine neue Rohstoffgewinnung, indem viele bis jetzt verlorene Biomassen einzeln mit Trockenstoff oder ineinander und mit Trockenstoff vermischt zu einem ästhetischen und in seiner Weiterverwendung gleichbleibenden Brennstoff gewonnen werden, der zur Entsorgung und zur Energie-Einsparung einen wesentlichen Beitrag in Form von Alternativ-Energie leistet und somit den Interessen der Allgemeinheit beachtliche Dienste leistet. An Orten, wo bereits entsprechende Heizanlagen vorhanden sind, können Kommunen ihre eigenen Anlagen wie Schulen, Bäder, Verwaltungen mit nach der Erfindung hergestellten Alternativ-Brennstoffen krisensicher und wirtschaftlich interessant betreiben.

Nachfolgend wird die Erfindung anhand von in einer schematischen Zeichnung dargestellten bevorzugten Ausführungsbeispielen beschrieben. Es zeigt

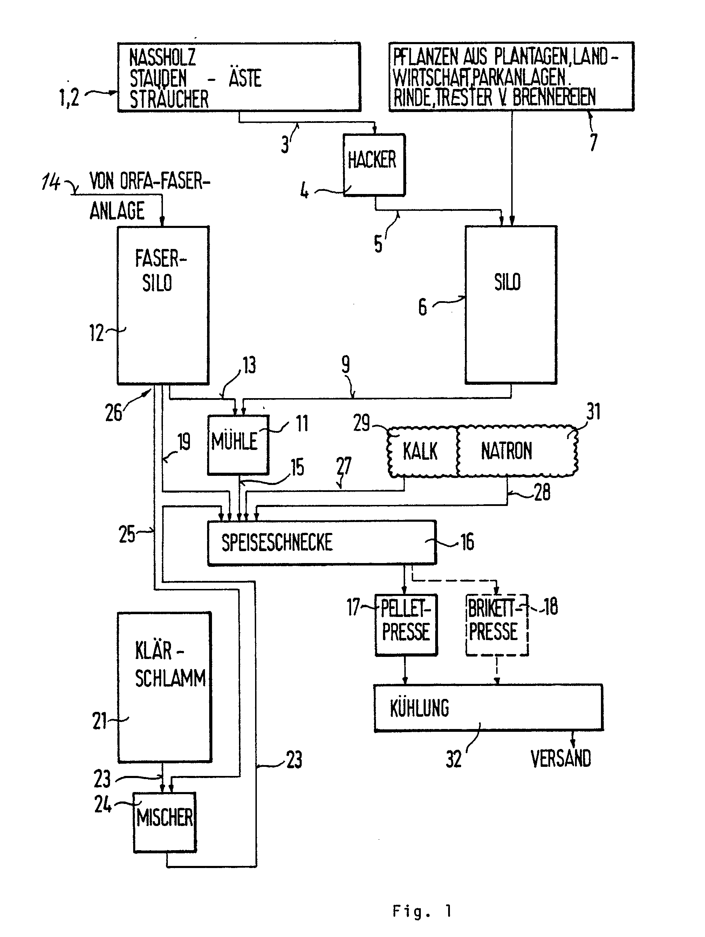

Fig. 1 einen Laufplan zum Herstellen von Preßlingen aus feuchten organischen Abfällen;
Fig. 2 einen Laufplan für eine abgewandelte Herstellungsart;
Fig. 3 eine Tabelle ihrer Mischungsverhältnisse von Preßlingen;
Fig. 4 einen nach dem erfindungsgemäßen Verfahren hergestellten Preßling in perspektivischer Darstellung,
Fig. 5 und 6 Stapelanordnungen für Preßlinge;
Fig. 7 eine Lageranordnung für die Nachbehandlung der Preßlinge;
Fig. 8 ein Endlager für die Preßlinge.

Der auf einem Lagerplatz 1 liegende Grob-Abfall 2 wie Naßholz, Sträucher, Stauden usw. wird mittels einer andeutungsweise dargestellten Fördereinrichtung 3 einem Vorzerkleinerer 4 aufgegeben, der daraus Hackschnitzel oder Grobspäne herstellt, die anschließend mittels einer Fördereinrichtung 5 einem Bunker oder Silo 6 zugeführt werden. Gleichzeitig kann dem Silo 6 unter Umgehung des Vorzerkleinerers 4 auch kleinstückiger Abfall 7 aus Plantagen und Landwirtschaft oder Parkanlagen zugeführt werden. Das Silo 6 ist mit einer Austragungss-und Dosiereinrichtung (nicht dargestellt) ausgerüstet, die es ermöglicht, mittels einer Fördereinrichtung 9 einen Nachzerkleinerer 11 in Form einer Feinmühle gleichmäßig und kontinuierlich zu beschicken.

Der Nachzerkleinerer 11 ist eine handelsübliche Hammer-, Schlag- oder Prall-Mühle mit einem klassierenden Siebeinbau (Lochweite 8 mm im Durchmesser). Der Nachzerkleinerer 11 hat die Aufgabe, das teils vorgebrochene und teils kleinstückige Material aus dem Silo 6 in die gewünschte Endgröße von ca. 8 mm zu bringen.

Aus einem Silo 12 kann dem Nachzerkleinerer 11 mittels einer Fördereinrichtung 13 ein Trockenstoff blatt-bzw. faserförmige Materials 14 aufgegeben werden. Das Fasermaterial 14 liegt unter der gewünschten Korngröße und belastet somit den Zerkleinerer 11 nicht, bezweckt aber, daß das beim Zerkleinern freiwerdende Wasser aus den Feuchtteilen zum großen Teil aufgenommen und aus dem Zerkleinerer abgeführt wird. Die Mengenzugabe des Fasermaterials 14 richtet sich nach dem Feuchtigkeitsgehalt des vorhandenen feuchten Abfalls. Es wird ein Feuchtigkeitsgehalt im Bereich von ca. 15 % angestrebt. Bei diesem Feuchtigkeitsgehalt werden Verklebungen im Zerkleinerer verhindert.

Bei dem Fasermaterial 14 handelt es sich vorzugsweise um ein Material, das durch einen Aufbereitungsprozeß aus Abfall gewonnen wird. Hierzu eignen sich mehrere, Orfa-Verfahren, wozu auf das DE-Patent 31 05 597 und die DE-Patentanmeldung P 36 14 325.1 sowie P 36 14 324.3 und auf das zweite Ausführungsbeispiel verwiesen wird. Auf diese Verfahren wird Bezug genommen. Das Fasermaterial 14 weist einen Feuchtigkeitsgehalt von etwa 5 % auf und ist somit stark saugfähig.

Der Nachzerkleinerer 11 ist durch eine Fördereinrichtung 15 mit einer Aufgabevorrichtung 16 für eine Pellet- und/oder Brikettpresse 17, 18 verbunden, wobei die Aufgabevorrichtung 16 durch eine Speiseschnecke gebildet sein kann.

Zwischen dem Silo 12 und der Aufgabevorrichtung 16 besteht eine direkte Fördereinrichtung 19, die es ermöglicht, dann wenn keine oder wenig Nassteile im Abfall vorhanden sind, das faserförmige Material 14 direkt und alleine zu verpressen.

Der Aufgabevorrichtung 16 ist ein Bunker 21 zur Aufnahme von eingedicktem Klärschlamm aus Kläranlagen vorgeordnet, der durch eine Fördereinrichtung 23 mit der Aufgabevorrichtung 16 verbunden ist. In der Fördereinrichtung 23 ist ein Mischer 24 angeordnet, der durch eine Fördereinrichtung 25 auch mit dem Silo 12 verbunden ist. Im Mischer 24 werden Klärschlamm und das Trocknungsmittel aus dem Silo 12 miteinander vermischt und zur Aufgabevorrichtung 16 gefördert. Der Mischer 24 ist ein handelsübliches Gerät und vermag kontinuierlich zu arbeiten. Den Fördereinrichtungen z.B. 9, 13, 15, 19, 23, 25 ist jeweils, z.B. bei 26, eine nicht dargestellte Dosiereinrichtung zugeordnet. Es ist somit möglich, alle Komponenten, nämlich den Abfall aus dem Silo 6, das Fasermaterial aus dem Silo 12, den Klärschlamm aus dem Bunker 21, die Mischung aus dem Nachzerkleinerer 11 und die Mischung aus dem Mischer 24 einzeln oder vermischt der Aufgabevorrichtung 16 dosiert zuzuführen, der außerdem Zuschlagsstoffe wie Kalk und/oder Natron, die ihr durch Fördereinrichtungen 27, 28 aus Behältern 29, 31 dosiert zuführbar sind, einmischt und zur Presse bzw. zu den Pressen 17, 18 fördert. Auf diese Weise ist ein insbesondere vom Nachzerkleinerer 11 und vom Mischer 24 unabhängiger Leistungsausgleich möglich. Zum Zweck der Zuschlagsstoffe wird auf eingangs angeführte Wirkungen verwiesen.

Die die Aufgabevorrichtung 16 bildende Speiseschnecke ist eine handelsübliche Palettenschnecke von etwa 3 m Länge und darüber. Dies bewirkt, daß die Materialien einschließlich der evtl. eingebrachten Zuschlagsstoffe intensiv durchmischt werden.

Das in die Presse 17 eingebrachte Material wird unter hohem Druck in der vorhandenen Matrize in Verbindung mit dadurch entstehender Reibungswärme zu den gewünschten Preßlingen (Pellets) in beliebiger Größe zwischen 6 bis 20 mm Durchmesser und Längen zwischen 10 bis 30 mm geformt.

In der Presse 18 lassen sich Briketts mit größeren Massen bzw. Abmessungen, z.B. mit Durchmesser zwischen 40 und 100 mm und Längen zwischen 200 und 300 mm herstellen. Die Aufbereitungsart der pressfähigen Bio-Massen bleibt dieselbe. Die Zuführung zu den Pressen 17, 18 können gleichzeitig oder jeweils auch einzeln erfolgen.

Von der oder den Pressen 17, 18 gelangen die heißen Preßlinge zu einer Kühlzone oder zu einer Kühleinrichtung 32, in der die Preßlinge auf die Umgebungstemperatur abgekühlt werden. Dabei tritt auch die endgültige Aushärtung der im warmen Zustand noch weichen Preßlinge ein.

Die Kühleinrichtung 32 ist ebenfalls eine auf dem Markt erhältliche Maschine. Nachdem die Preßlinge gekühlt worden sind, können sie eingelagert und/oder verpackt und/oder dem Konsumenten (Verbrennungsanlagen) überliefert werden.

Die Preßlinge verlassen die Vorrichtung bzw. Anlage in gebrauchsfertigem Zustand mit einem Feuchtigkeitsgehalt von ca. 5 bis 10 % und sind unbeschränkt haltbar.

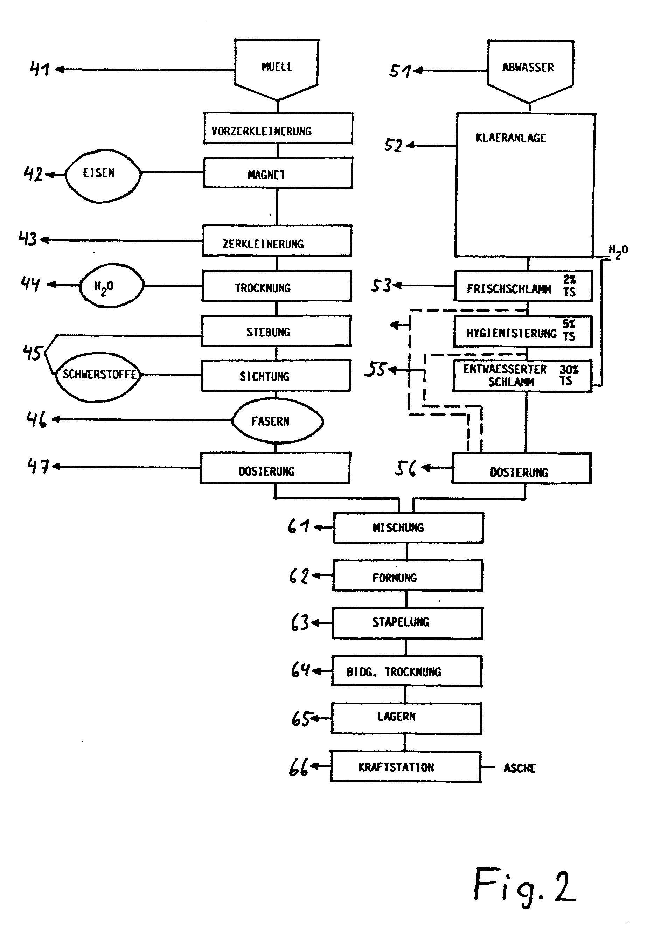

Im folgenden werden die einzelnen Positionen des Ausführungsbeispiels gemäß Fig. 2 beschrieben.

Pos. 41: Das Grundmaterial wird aus gemischtem Gewerbemüll oder vorzugsweise Hausmüll hergestellt.

Pos. 42: Die Abfälle werden vorzerkleinert und von Eisenmetallen befreit.

Pos. 43: Anschließend werden sie auf max. 10 mm Ø Stückgröße zerkleinert.

Pos. 44: In einem weiteren Schritt werden sie auf 5 % Wassergehalt getroöknet.

Pos. 45: Das Trockengut wird mittels Siebung und Windsichtung in eine anorganische Ballastfraktion und in eine organische Grundmaterialfraktion getrennt.

Pos. 46: Durch den Vorbereitungsprozeß ist die organische Trockenfraktion flockig, blattförmig, faserig und/oder körnig, was für die Folgebehandlung wichtig ist.

Pos. 47: Die Trockenfraktion wird in einer handelsüblichen Einrichtung nach Gewicht oder Volumen dosiert und zur Vermischung an Pos. 61 weitergeleitet.

Pos. 51 bis 55: Sind vorhandene Einrichtungen und Verfahrensschritte von existierenden Kläranlagen, die Frischschlamm mit etwa 2 %, hygienisierten Schlamm mit etwa 5 % und entwässerten Schlamm mit etwa 30 % Trockensubstanz vorgeben.

Pos. 56: Dosierung: Die gewünschten Schlämme (Pos. 53, 54 und 55) werden einzeln oder in gewünschter Zusammensetzung einer handelsüblichen Dosiereinrichtung zugeleitet, die die verlangte Menge an Pos. 61 abgibt.

Pos. 61: Es erfolgt eine Vermischung des Klärschlamms und der Trockenfraktion mittels geeigneter Mischer wie konventionelle Doppelwellen oder Turbomischer, die in der Spanplattenindustrie für die Beleimung von Holzspänen eingesetzt werden. Die Mischeinrichtung muß so ausgelegt sein, daß eine einwandfreie Durchmischung gewährleistet ist, damit sofort ein Feuchtigkeitsausgleich zwischen dem Schlamm und der Trockenfraktion stattfindet.

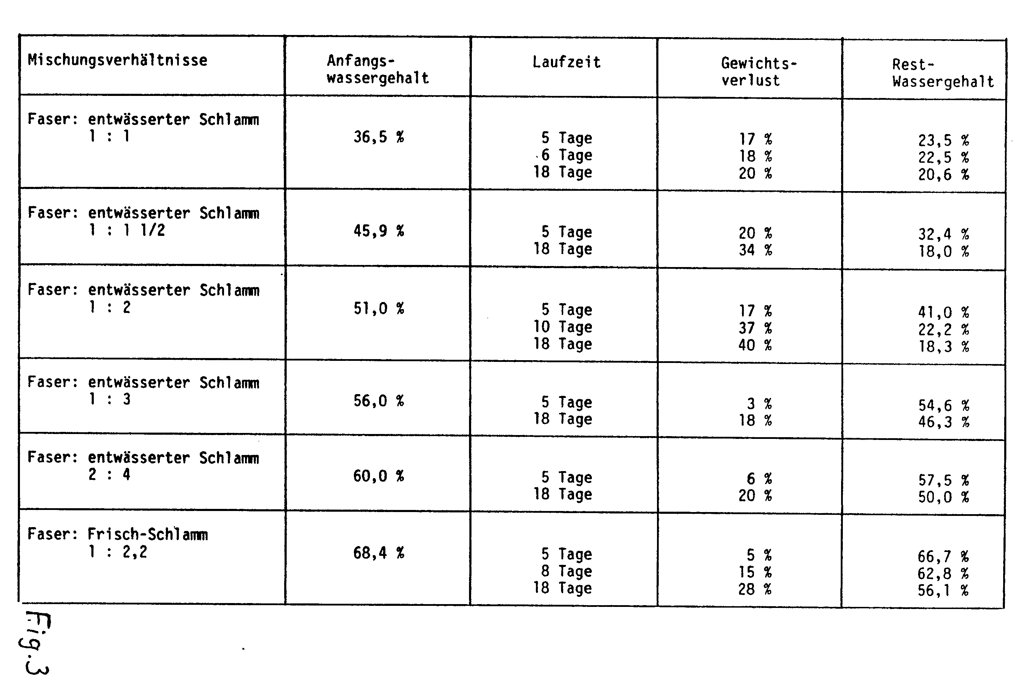

Pos. 62: Hier erfolgt die Formung von Preßlingen in einer Stempel- oder Strangpresse, wie sie in der Steinindustrie oder zur Herstellung von Briketts benötigt wird. Die Pressung sollte vorzugsweise einstellbar sein, damit die Dichte der Preßlinge bestimmt werden kann. Üblicherweise werden die Form- bzw. Preßlinge mit einem Druck zwischen 40 - 70 bar gepreßt. Der Preßdruck ist von der Art des Schlammes (Pos. 53, 54 und 55) sowie dem gewählten Mischungsverhältnis (siehe Tabelle gemäß Fig. 3) abhängig. Die Größe und Form der Preßlinge wird so gewählt, daß

a) eine optimale biogene Fermentationstrocknung gewährleistet ist und

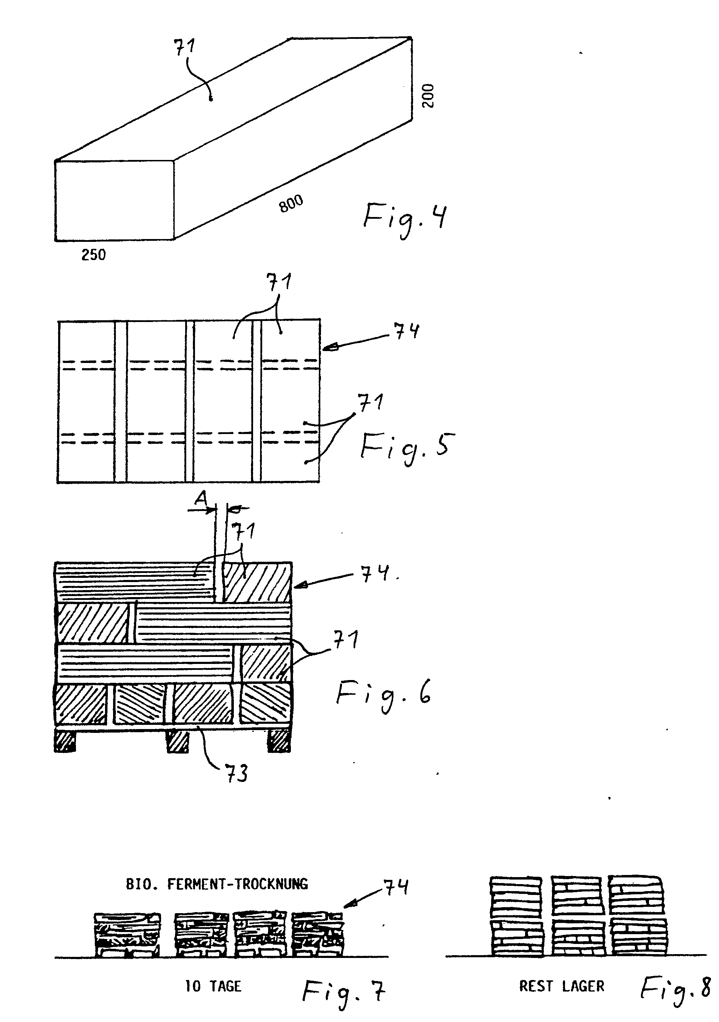

b) eine Aufschichtung bzw. Stapelung vorzugsweise auf eine Unterlage, z.B. Europalette möglich ist. Hierdurch ist eine platzsparende Lagerung und ein maschineller Transport gewährleistet (siehe Fig. 4 bis 8), in denen die Preßlinge mit 71 bezeichnet sind. Eine Größe eines quaderförmigen Presslings 71 von etwa 250 x 800 mm Grundfläche und 200 mm Höhe hat sich als vorteilhaft erwiesen.

Pos. 63: Stapelung: Die in Pos. 63 geformten Preßlinge 71 werden von einer Stapeleinrichtung übernommen und auf die gewünschte Unterlage, z.B. Roste 72 oder Transportpalette 73 geschichtet. Diese Einrichtungen sind ebenfalls auf dem Markt erhältlich. Bei der Stapelung und Anordnung der Preßlinge 71 muß darauf geachtet werden, daß:

a) zwischen den Preßlingen Luft zirkulieren kann (Abstand A), um die austretenden Dämpfe entweichen zu lassen, und

b) nur so viel Lagen aufeinandergeschichtet werden, daß die unterste Lage vom aufliegenden Gewicht nicht deformiert wird (in der Regel sind 4 - 5 Lagen möglich).

Die Pressling-Stapel 74 können mit einer Fördereinrichtung, z.B. einem Hubstapler, in das biologische Trocknungslager (Fig. 7) gefahren werden.

Pos. 64: Biogene Trocknung: Das Trocknungslager sollte vorzugsweise so angelegt werden, daß zwischen den Stapeln 74 eine Durchlüftung gewährleistet ist. Vorteilhaft wird dieser überdachte Raum durch ein schwaches Unterdrucksystem aspiriert.

Durch die vorbeschriebenen Bedingungen, wie

- Mischungsverhältnis,
- Feuchtigkeitsgehalt des Mischgutes,
- Dichte und Preßdruck bei der Herstellung der Preßlinge 71 sowie
- die in Verbindung gebrachte organische Trockenfraktion mit dem Mikro-Organismen enthaltenden Klärschlamm,

tritt sofort ein aerober Fermentationsprozeß in Kraft.

Durch den biologischen Gärprozeß wird innerhalb von wenigen Stunden eine Selbsterhitzung ausgelöst. Die Erhitzung steigert sich in der Regel innerhalb von 5 Tagen auf 70 - 80 °C. Diese Temperaturen zeigen, daß große Mengen Wasser verdampft werden. Der Prozeß dauert solange, bis der miteingemischte Sauerstoff aufgebraucht ist. Sobald der Sauerstoff von den Organismen verbraucht ist, klingt der Gärprozeß ab und die Preßlinge kühlen aus. Die Auskühlungsphase beträgt in der Regel (laut Versuchen) 4 - 5-Tage. Während der Auskühlung tritt die Myzelphase ein, bei der die Preßlinge komplett verpilzt werden. Durch die Verpilzung werden die Preßlinge armiert, was zu einer Verfestigung führt. Indem die Preßlinge weiter austrocknen, wird der Gärprozeß plötzlich unterbrochen. Auch den Myzelen werden durch die Austrocknung die Lebensbedingungen entzogen und sie erstarren. Durch die miteingetrocknete Verpilzung erhalten die Preßlinge ein eigenes Stehvermögen, das eine Aufeinander-Schichtung bzw. Stapelung ermöglicht. Prozeßdetails aus Versuchen, siehe Tabelle gemäß Fig. 3.

Pos. 65: Lager: Die in Pos. 64 beschriebenen biogen getrockneten Preßlinge 71 werden in einer nachgeordneten Lagerhalle zur gänzlichen, bzw. auf den gewünschten Wassergehalt einzustellende Endfeuchte, getrocknet. Durch die Endlagerung kann die Endfeuchte und somit der Wärmegehalt der Preßlinge weitgehend bestimmt werden.

Die Endlagerung muß lediglich überdacht sein, damit kein Regenwasser an die Preßlinge gelangt.

Pos. 66: Ab dem Lager (Pos. 65) können die Preßlinge 71 den gewünschten Verbraucherstationen zugeführt und nach Bedarf in Energie umgesetzt werden. Zur Wärmegewinnung aus vorbeschriebenem Brennstoff, (Preßlinge) eignen sich sämtliche Ofeneinheiten, wie Rostfeuerung, Wirbelschicht, Pyrolysen, Vergasungen usw., die vorzugsweise mit entsprechenden Gasreinigungseinrichtungen ausgerüstet sind.

Wie beim ersten Ausführungsbeispiel schon erwähnt, sind die Positionen 41 bis 46 im DE-Patent 31 05 597 und in den DE-Patentanmeldungen P 36 14 324.3 und P 36 14 325.1 beschrieben, worauf Bezug genommen wird.

Im Rahmen der Erfindung ist es möglich und vorteilhaft, die körnige, flockige, blättrige und/oder faserige Trockenfraktion weiter zu trennen und nur die blättrige und/oder faserige Fraktion (Leichtfraktion) insbesondere aus organischen Stoffen für den aeroben Fermentationsprozeß zu verwenden.

**Patentansprüche**

7

1. Verfahren zur Herstellung von Preßlingen aus feuchtem Abfall gekennzeichnet durch folgende Merkmale:
   - der feuchte Abfall wird mit einem Trockenmittel, das durch Aufbereitung aus Haushalts- und Gewerbeabfällen gewonnen wurde und faser-, flocken- und/oder blattförmig ist, vermischt,
   - die Restfeuchte dieses Trockenmittels beträgt 5 oder weniger Prozent,
   - der feuchte Abfall kann einen Wassergehalt von 25 - 75 %, vorzugsweise 40 - 60 %, besitzen,
   - der feuchte Abfall und das Trockenmittel werden auf eine Preßfeuchtigkeit von ungefähr 15 % vermischt,
   - und ohne Nachbehandlung zu den fertigen Preßlingen verpreßt,
   - wobei nach der Preßung die Preßlinge eine Endfeuchte von 7 - 9 % aufweisen.

2. Verfahren nach Anspruch 1, dadurch gekennzeichnet, daß der Abfall Klärschlamm und/oder Trester ist und den Abfällen Trester aus Brauereien, Klärschlamm, Kalk und/oder Natronlauge zugemischt wird.

## Claims

1. A method for preparing compacts from moist waste material, characterised by the following features:
   - the moist waste material is mixed with a drying agent that is obtained by working-up household and industrial waste and is in the form of fibres, flakes or flocks and/or laminae,
   - the residual moisture content of this drying agent is 5% or less,
   - the moist waste material may have a water content of 25-75%, preferably 40-60%,
   - the moist waste material and the drying agent are mixed to give a pressing moisture content of about 15%,
   - and pressed to the finished compacts without after-treatment,
   - said compacts having a final moisture content after pressing of 7-9%.

2. A method according to claim 1, characterised in that the waste material is sewage sludge and/or residues from brewing, wine-making or the like, and that brewery residues, sewage sludge, lime and/or caustic soda is or are mixed with the waste material.

## Revendications

1. Procédé pour la fabrication de briquettes à partir de déchets humides, caractérisé par les caractéristiques suivantes :
   - les déchets humides sont mélangés à un agent de séchage obtenu par préparation à partir d'ordures ménagères et industrielles, et qui est en forme de fibres, de flocons et/ou de feuilles;
   - l'humidité résiduelle de cet agent de séchage est de 5% ou moins;
   - les déchets humides peuvent avoir une teneur en eau de 25 - 75%, de préférence de 40 - 60%;
   - les déchets humides et l'agent de séchage sont mélangés jusqu'à un taux d'humidité d'environ 15% au pressage;
   - et sont comprimés, sans autre traitement ultérieur, sous la forme de briquettes achevées;
   - les briquettes présentent après le pressage une humidité finale de 7 - 9%.

2. Procédé selon la revendication 1, caractérisé en ce que les déchets sont des boues de clarification et/ou des drêches, et qu'on mélange aux déchets des drêches de brasserie, des boues de clarification, de la chaux et/ou de la lessive de soude.

Fig. 1

Fig. 2

| Mischungsverhältnisse | Anfangs-wassergehalt | Laufzeit | Gewichts-verlust | Rest-Wassergehalt |
|---|---|---|---|---|
| Faser: entwässerter Schlamm<br>1 : 1 | 36,5 % | 5 Tage<br>6 Tage<br>18 Tage | 17 %<br>18 %<br>20 % | 23,5 %<br>22,5 %<br>20,6 % |
| Faser: entwässerter Schlamm<br>1 : 1 1/2 | 45,9 % | 5 Tage<br>18 Tage | 20 %<br>34 % | 32,4 %<br>18,0 % |
| Faser: entwässerter Schlamm<br>1 : 2 | 51,0 % | 5 Tage<br>10 Tage<br>18 Tage | 17 %<br>37 %<br>40 % | 41,0 %<br>22,2 %<br>18,3 % |
| Faser: entwässerter Schlamm<br>1 : 3 | 56,0 % | 5 Tage<br>18 Tage | 3 %<br>18 % | 54,6 %<br>46,3 % |
| Faser: entwässerter Schlamm<br>2 : 4 | 60,0 % | 5 Tage<br>18 Tage | 6 %<br>20 % | 57,5 %<br>50,0 % |
| Faser: Frisch-Schlamm<br>1 : 2,2 | 68,4 % | 5 Tage<br>8 Tage<br>18 Tage | 5 %<br>15 %<br>28 % | 66,7 %<br>62,8 %<br>56,1 % |

Fig.3

EP 0 247 285 B1

Fig. 4

Fig. 5

Fig. 6

BIO. FERMENT-TROCKNUNG

10 TAGE

Fig. 7

REST LAGER

Fig. 8